# FASCICULE DE BREVET EUROPEEN

(11) **EP 1 781 935 B1**
(45) Date de publication et mention de la délivrance du brevet: **30.10.2019**
(21) Numéro de dépôt: 05797477.6
(22) Date de dépôt: 10.08.2005
(51) Int. Cl.: F02N 11/08, B60W 10/06, B60W 10/30, B60W 30/192, F02N 11/00, F02D 41/02

(54) **PROCEDE DE COMMANDE DU FONCTIONNEMENT D'UNE MACHINE ELECTRIQUE FORMANT DEMARREUR D'UN MOTEUR THERMIQUE ET D'UN EQUIPEMENT ELECTRIQUE**
VERFAHREN ZUR STEUERUNG DES BETRIEBS DES STARTERS EINER BRENNKRAFTMASCHINE UND EINER ELEKTRISCHEN VORRICHTUNG
METHOD OF CONTROLLING THE OPERATION OF A STARTER OF A INTERNAL COMBNUSTION ENGINE AND OF ELECTRICAL EQUIPMENT

(30) Priorité: 27.08.2004 FR 0451924
(43) Date de publication de la demande: 09.05.2007
(73) Titulaire: PSA Automobiles SA, 78300 Poissy (FR)
(72) Inventeur: KLEIN, Hervé, F-92300 Levallois Perret (FR); LEVASSEUR, Guillaume, F- 92000 NANTERRE (FR); CELISSE, Arnaud, F-92400 Courbevoie (FR); GUY, Jean-Emmanuel, F-78150 LE CHESNAY (FR)
(74) Mandataire: Ménès, Catherine
(86) Numéro de dépôt international: PCT/FR2005/050670
(87) Numéro de publication internationale: WO 2006/027516

(56) Documents cités:
- EP-A- 0 601 300
- EP-A- 1 104 075
- JP-A- 2002 349 695
- JP-A- 2004 068 735
- JP-A- 2004 084 515
- US-A- 6 032 632
- US-A1- 2003 151 307
- US-B1- 6 176 810
- PATENT ABSTRACTS OF JAPAN vol. 014, no. 107 (M-0942), 27 février 1990 (1990-02-27) & JP 01 309826 A (NISSAN MOTOR CO LTD), 14 décembre 1989 (1989-12-14)

## Description

La présente invention concerne un procédé de commande de l'arrêt et du démarrage automatique d'un moteur thermique équipant un véhicule automobile ou routier.

La présente invention concerne plus particulièrement l'arbitrage entre la commande de démarrage du moteur thermique et l'actionnement d'un autre équipement du véhicule.

Les constructeurs de véhicules équipés de moteurs thermiques, tels que les véhicules automobiles ou routiers, cherchent en permanence des solutions techniques susceptibles de réduire la consommation et les émissions de polluants de ces moteurs.

Parmi les différentes solutions développées à ce jour, il a été proposé un système provoquant l'arrêt automatique du moteur dans toutes les phases d'utilisation du véhicule où le fonctionnement du moteur n'est pas nécessaire, telles que les phases où le véhicule est momentanément à l'arrêt et où le moteur continue malgré tout de fonctionner au ralenti, puis opérant le démarrage automatique du moteur lorsque le conducteur souhaite faire repartir son véhicule.

Cette solution d'arrêt et de démarrage automatique des moteurs, encore appelée par les Anglo-saxons "Stop and Start" ou "Stop and Go", a un potentiel important de réduction de la consommation des moteurs car on estime qu'en moyenne, pour un trajet donné, un véhicule est à l'arrêt, moteur tournant au ralenti, pendant environ 20% du temps.

Un système "Stop and Start" comprend généralement un calculateur pour commander automatiquement l'arrêt et le démarrage du moteur thermique à partir d'informations appropriées sur le fonctionnement du véhicule. Ce calculateur comporte notamment des moyens aptes à identifier une phase de demande d'arrêt moteur, des moyens aptes à identifier une phase d'autorisation d'arrêt moteur pendant laquelle l'arrêt du moteur est effectivement possible et des moyens pour opérer l'arrêt effectif du moteur si les conditions "véhicule en phase de demande d'arrêt moteur" et "véhicule en phase d'autorisation d'arrêt moteur" sont réunies.

De la même manière un système "Stop and Start" comporte notamment des moyens aptes à identifier une phase de demande de démarrage moteur, des moyens aptes à identifier une phase d'autorisation de démarrage moteur pendant laquelle le démarrage du moteur est effectivement possible et des moyens pour opérer le démarrage effectif du moteur si les conditions "véhicule en phase de demande de démarrage moteur" et "véhicule en phase d'autorisation de démarrage moteur" sont réunies.

On appelle "phase de demande d'arrêt moteur" toute période temporelle pendant laquelle le conducteur marque sa volonté d'arrêter le moteur de son véhicule, le véhicule pouvant être arrêté ou encore roulant. Une telle volonté d'arrêt du moteur peut être caractérisée par différents critères, comme l'actionnement par le conducteur de la pédale de frein du véhicule.

On appelle "phase d'autorisation d'arrêt moteur" toute période pendant laquelle le fonctionnement du véhicule ne requière pas le fonctionnement du moteur et autorise donc son arrêt. Les conditions de fonctionnement du véhicule requérant le fonctionnement du moteur et ce, alors que le véhicule se trouve en phase de demande d'arrêt moteur, peuvent aussi bien concerner le fonctionnement même d'un équipement du véhicule que relever du seul agrément de conduite. Ces conditions s'opposant à l'arrêt du moteur sont caractérisées par des critères variés telle que par exemple la température de l'eau de refroidissement moteur inférieure à une valeur de seuil prédéterminée. En effet, un moteur doit atteindre une certaine température pour fonctionner de façon optimale, il n'est donc pas opportun de retarder la montée en température du moteur en l'arrêtant trop tôt après son démarrage.

On appelle "phase de demande de démarrage moteur" toute période temporelle pendant laquelle le fonctionnement du véhicule requière le démarrage du moteur. Les conditions de fonctionnement du véhicule requérant un tel démarrage se déduisent généralement des conditions s'opposant à l'arrêt du moteur.

On appelle "phase d'autorisation de démarrage moteur" toute période pendant laquelle le fonctionnement du véhicule n'interdit pas le démarrage du moteur. Les conditions de fonctionnement s'opposant à un démarrage peuvent être liées par exemple à l'état ouvert ou fermé de l'embrayage et/ou à l'état de la transmission, vitesse engagée ou non.

Pour opérer le démarrage d'un moteur thermique dans le cadre d'un système "Stop and Start" on utilise généralement une machine électrique spécialement adaptée appelée alterna-démarreur. Cette machine électrique agit à la fois comme générateur électrique lorsqu'elle est entraînée par le moteur thermique et comme moteur électrique pour le démarrage du moteur thermique.

Lorsque cette machine est en mode moteur, c'est-à-dire démarreur elle prélève une énergie non négligeable sur le réseau de bord du véhicule généralement alimentée par une batterie. Cela est donc à même de poser problème lorsque qu'un autre équipement électrique est actionné en même temps qu'est déclenchée une commande de démarrage.

Un procédé de commande d'un alterno-démarreur et d'un équipement électrique est également connu du document JP2004084515.

Afin de ne pas avoir à surdimensionner la batterie ou encore à limiter les démarrages, il est apparu important pour la Demanderesse de développée une stratégie d'arbitrages lorsqu'un démarrage est commandé simultanément avec l'actionnement d'un équipement électrique et ce, d'autant plus que l'actionnement de l'équipement électrique est de courte durée comme par exemple un actionneur de changement de rapport de boîte de vitesses robotisée.

La présente invention vise donc un procédé de commande apte à opérer un arbitrage entre une commande de démarrage et la commande de l'actionnement d'un équipement électrique.

Le procédé selon l'invention concerne la commande du fonctionnement d'une machine électrique formant démarreur d'un moteur thermique dans un système d'arrêt et de démarrage automatique dudit moteur et d'un équipement électrique, le démarreur et l'équipement électrique étant alimentés par une même source d'énergie, par laquelle les fonctionnements du démarreur et de l'équipement électrique sont respectivement commandés après qu'une phase de demande de fonctionnement ait été identifiée et sous réserve que des conditions prédéterminées ne s'y opposent pas, le fonctionnement du démarreur constituant une condition s'opposant à un fonctionnement simultané de l'équipement électrique.

Selon l'invention, le procédé de commande est caractérisé en ce que le fonctionnement de l'équipement n'est possible après une période de temps prédéterminée suivant l'identification d'une phase de demande de fonctionnement de l'équipement que si aucune commande du fonctionnement du démarreur n'a été identifiée pendant cette période, le démarreur et l'équipement coopèrant chacun avec un calculateur spécifique opérant l'identification des phases de demande de fonctionnement correspondantes, ces calculateurs s'échangeant des informations au moyen d'une liaison adaptée tel qu'un bus, et la période de temps prédéterminée après laquelle le fonctionnement de l'équipement est possible, étant calibrée de façon à prendre en compte les temps de transfert des informations d'un calculateur à l'autre et les temps de traitement desdites informations.

Selon une autre caractéristique du procédé de commande objet de la présente invention, la commande du fonctionnement du démarreur s'oppose au fonctionnement simultané de l'équipement.

Selon une autre caractéristique du procédé de commande objet de la présente invention, le fonctionnement de l'équipement s'oppose au fonctionnement du démarreur.

Selon une autre caractéristique du procédé de commande objet de la présente invention, l'équipement coopère avec le système de transmission du véhicule.

Selon une autre caractéristique du procédé de commande objet de la présente invention, si une commande de fonctionnement du démarreur n'est pas opérée consécutivement à l'identification d'une phase de demande de fonctionnement de l'équipement alors le fonctionnement du démarreur n'est plus autorisé tant que l'équipement n'a pas fini son fonctionnement effectué consécutivement à ladite phase de demande de fonctionnement.

Selon une autre caractéristique du procédé de commande objet de la présente invention, le calculateur coopérant avec le démarreur transmet au calculateur coopérant avec l'équipement l'information qu'un fonctionnement du démarreur est commandé.

Selon une autre caractéristique du procédé de commande objet de la présente invention, le calculateur coopérant avec l'équipement transmet au calculateur coopérant avec le démarreur l'information qu'une phase de demande de fonctionnement de l'équipement a été identifiée et ce, préalablement à toute commande de l'équipement.

L'invention sera mieux comprise à la lecture de la description qui va suivre, donnée uniquement à titre d'exemple et faite en se référant aux dessins annexés sur lesquels :
- la figure 1 représente une architecture matérielle de l'ensemble du système de mise en œuvre du procédé selon l'invention ;
- les figures 2a et 2b représentent des organigrammes schématiques pour la mise en œuvre du procédé selon l'invention.

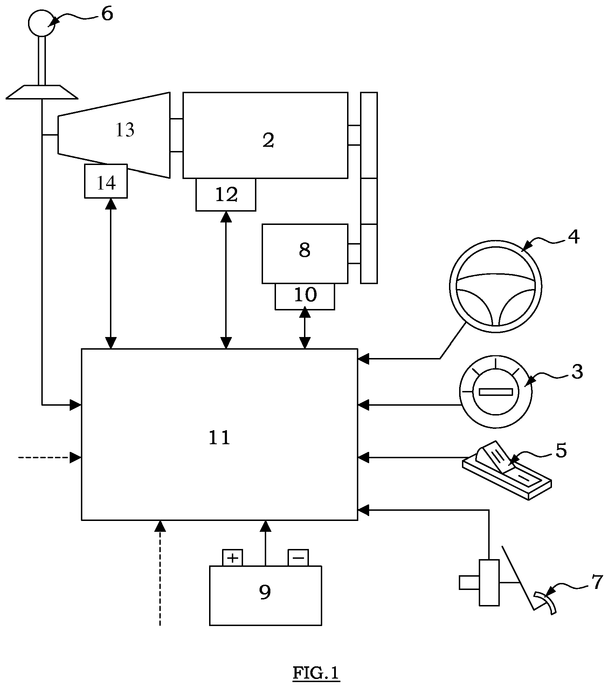

La figure 1 représente différents organes d'un véhicule automobile équipé d'un moteur thermique 2. Dans l'habitacle du véhicule, un commutateur 3 (avec ou sans clé) disposé à proximité du volant de direction 4 commande manuellement le démarrage ou l'arrêt du moteur 2 tandis qu'un moyen, tel qu'un commutateur à deux positions de type bouton poussoir 5, permet au conducteur d'activer ou d'inhiber le fonctionnement du véhicule en mode "Stop and Start", c'est-à-dire en mode d'arrêt et de démarrage automatique du moteur 2.

Le véhicule comporte par ailleurs un mécanisme de transmission 13 de type boîte de vitesses robotisée 13 commandé par un calculateur 14 et dont un levier de changement de vitesses associé 6 est figuré. Le véhicule dispose également d'un dispositif de freinage commandé notamment par une pédale de frein 7.

Bien évidemment ces équipements ne sont pas limitatifs des autres équipements du véhicule qui n'ont pas été figurés tels que notamment un embrayage, un groupe moto-ventilateur pour refroidir le moteur 2, un dispositif de climatisation pour refroidir/chauffer l'habitacle ou encore un mécanisme de direction assistée, etc.

Le moteur thermique 2 est un moteur classique du type multi-cylindres à allumage commandé ou à allumage par compression (diesel). Ces types de moteur sont bien connus et ne seront donc pas détaillés plus avant. Le fonctionnement du moteur 2 est classiquement commandé par un calculateur de contrôle moteur 12 qui pilote notamment le débit de carburant.

Le moteur 2 coopère avec des moyens de démarrage appropriés telle qu'une machine électrique tournante réversible 8 formant alterno démarreur. Une transmission de mouvement, par exemple par poulies et courroie, relie le rotor de l'alterno-démarreur 8 au vilebrequin du moteur 2.

Dans une variante de réalisation, le moteur 2 peut également coopérer avec un démarreur additionnel non figuré distinct de l'alterno-démarreur 8.

La machine 8 permet de transformer un mouvement de rotation du rotor inducteur, entraîné par le moteur thermique 2 du véhicule, en un courant électrique induit dans les bobinages du stator. Ce courant est alors destiné à alimenter en électricité le réseau de bord du véhicule et à charger la batterie 9 de ce véhicule.

La machine 8 peut également constituer un moteur électrique ou machine électrique tournante et entraîner en rotation, via l'arbre de rotor, le moteur thermique 2 du véhicule. Ainsi, l'alterna-démarreur 8 peut démarrer le moteur thermique 2 du véhicule automobile.

Cette machine 8 par exemple de type polyphasé fonctionne donc en alternateur pour, notamment, charger la batterie du véhicule et en démarreur pour entraîner le moteur à combustion interne, dit aussi moteur thermique, du véhicule automobile pour son démarrage. A cet effet, une unité de puissance connectée sur les phases de l'induit de l'alternateur sert de pont de commande de ces phases en mode moteur et fait office de pont redresseur lorsque l'alterna-démarreur 8 fonctionne en mode alternateur.

Une telle machine 8 est bien connue en elle-même et ne sera pas détaillée plus avant. Le document FR2842041 décrit par exemple une telle machine.

Le système mettant en œuvre le procédé de commande automatique de l'arrêt et du démarrage du moteur selon l'invention comprend un calculateur 11 qui pilote via les calculateurs 10 et 12 le fonctionnement de la machine 8 et l'arrêt et le démarrage du moteur 2 et ce, à partir d'un certain nombre d'informations concernant le fonctionnement du véhicule.

Le calculateur 11 coopère en effet avec des capteurs d'information appropriés aptes à fournir en plus de la position du commutateur 3 ou du bouton 5, les informations requises sur le fonctionnement du véhicule telle que la vitesse de rotation du moteur 2, la vitesse du véhicule, la distance parcourue, la position de la pédale d'embrayage, la position de la pédale d'accélérateur, la position du levier de changement de vitesses 6, la position de la pédale de frein 7 et celle du levier de frein à main, le rapport de vitesse enclenchée dans la boîte de vitesses, la température d'eau de refroidissement du moteur, l'état de charge de la batterie 9, l'état de la climatisation, le couple exercé par le conducteur sur le volant, etc.

Il est important de remarquer que le calculateur 11 au sens de la présente invention est défini de façon plus générale comme étant tout système dans lequel peut être implanté un algorithme de commande à l'aide de moyens de programmation et contenant au moins une mémoire. Un réseau logique programmable du type ASIC pourrait être utilisé. Ce calculateur 11 peut être spécifique comme illustré ou bien encore être intégré à un autre calculateur comme, par exemple, les calculateurs 10 ou 12 ou bien encore intégré dans plusieurs calculateurs.

Le calculateur 11 opère une surveillance constante du fonctionnement du véhicule à partir d'un certain nombre d'informations transmises directement par des capteurs appropriés ou par l'intermédiaire d'autres calculateurs auxquels le calculateur Il est connecté à travers un bus multiplexé et notamment les calculateurs 14, 12 et 10, le moteur étant tournant, il en vérifie si le véhicule se trouve ou non en phase de demande d'arrêt moteur et en phase d'autorisation d'arrêt moteur et en déduit l'arrêt du moteur. De la même façon, le moteur étant arrêté, le calculateur 11 vérifie à partir des informations reçues si le véhicule se trouve ou non en phase de demande de démarrage et en phase d'autorisation du démarrage moteur et en déduit le démarrage du moteur.

Les phases de demande d'arrêt moteur sont définies par des critères de fonctionnement véhicule appropriés combinant le fait que le bouton 5 se trouve en position "non inhibé" et que notamment l'un des critères suivants soit observé:
- la position de la pédale de frein passe de "non appuyée" à "appuyée";
- le levier de vitesses est au neutre.

Pour ce qui est des phases d'autorisation d'arrêt moteur, elles sont définies à partir d'un certain nombre de critères identifiant des conditions de fonctionnement véhicule prédéfinies s'opposant à l'arrêt du moteur 2.

On pourra distinguer différents types de condition de fonctionnement véhicule susceptibles de définir ces phases d'autorisation:
- des conditions liées au véhicule proprement dit tels que les besoins moteur (température d'eau, etc.), les besoins d'assistance freinage, les besoins du réseau électrique de bord, les besoins thermiques habitacles, etc.;
- des conditions liées à l'agrément de conduite tels que des manœuvres de parking, etc.;
- des conditions liées au conducteur.

Pour ce qui est des phases de demande de démarrage, elles se déduisent sensiblement des conditions s'opposant à l'arrêt du moteur.

Quant aux conditions s'opposant aux demandes de démarrage, elles comprennent notamment des situations liées à la transmission telle que l'existence d'une vitesse enclenchée.

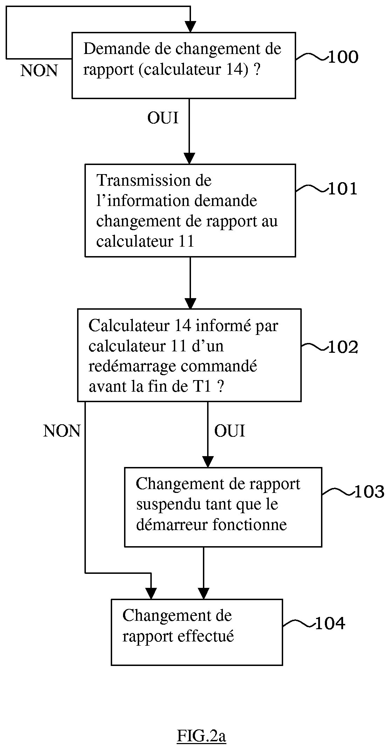

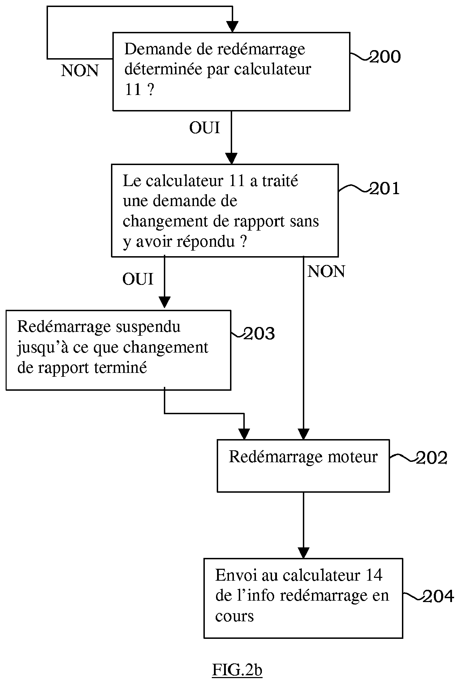

Les figures 2a et 2b représentent des organigrammes schématiques décrivant les algorithmes suivis respectivement par les calculateurs 14 et 11 pour opérer le procédé selon l'invention assurant l'arbitrage entre l'actionnement des moyens de démarrage du moteur 2 et l'actionnement de la boîte robotisée 13 pour opérer un changement de rapport de façon que le démarreur et l'actuateur de changement de vitesses ne prélèvent pas simultanément d'énergie sur la batterie 9.

De façon similaire à la commande du démarreur 8, un changement de rapport de la boîte robotisée 13 est piloté par son calculateur 14 à partir de l'identification, lors de l'étape 100, d'une phase de demande de changement de rapport et dans la mesure où des conditions particulières de fonctionnement du véhicule ne s'opposent pas à un tel changement de rapport.

Conformément au procédé de commande objet de la présente invention, dès lors que le calculateur 14 identifie une telle phase de demande de changement de rapport, il en informe, étape 101, le calculateur Il et attend ensuite, étape 102, l'information provenant du calculateur 11 selon laquelle un démarrage a été commandé.

En effet, le calculateur 11 communique systématiquement au calculateur 14 l'information selon laquelle le démarrage du moteur, c'est-à-dire l'actionnement du démarreur 8, est commandé et ce, sitôt cette information déterminée par le calculateur 11.

L'étape 102 testant la réception de l'information "démarreur commandé" est opérée pendant un temps T1 dont la valeur calibrée (par exemple de 60 ms) est suffisamment longue pour permettre au calculateur 11 de recevoir l'information "demande de changement de rapport" issue du calculateur 14, de prendre en compte ce nouvel événement que constitue la demande de changement de rapport et de déterminer si cela requière la commande du démarrage du moteur et d'envoyer en retour au calculateur 14, l'information selon laquelle un démarrage est commandé.

Si avant la fin de la période T1, le calculateur 11 informe le calculateur 14 qu'une demande de démarrage est commandée alors le calculateur 14 suspend le changement de rapport demandé jusqu'à ce qu'il récupère l'information, étape 103, selon laquelle le démarreur 8 a cessé d'être actionné, le moteur ayant été démarré. Lorsque le démarreur 8 a cessé de fonctionner, le changement de rapport est alors effectué à l'étape 104.

Si à la fin de la période Tl, le calculateur 14 n'a pas reçu d'information selon laquelle le calculateur 11 a décidé de commander le démarreur 8, alors le calculateur 14 commande le fonctionnement de la boîte robotisée pour opérer le changement de rapport demandé lors de l'étape 104.

Il est à noter que la temporisation T1 est plus particulièrement requise dans la mesure où l'architecture de communication entre les calculateurs ne permets par l'envoi d'une information spécifique par le calculateur 11 au calculateur 14 comme quoi aucun démarrage n'est commandé et que par conséquent la demande de changement de rapport peut être satisfaite, du moins vis-à-vis de ce critère. Avec un tel système, l'information selon laquelle il n'y a pas de commande de démarrage est simplement déduite de la non réception de l'information contraire (à savoir "un démarrage est commandé") dans un laps de temps donné.

De sorte que si l'architecture de communication permet bien l'envoi par le calculateur 11 d'une réponse spécifique au calculateur 14 comme quoi aucun démarrage n'est commandé, il n'est alors plus nécessaire de gérer de temporisation T1. Il suffit, en effet, dans ce cas que le calculateur 14 attende la réponse (positive ou négative) du calculateur 11 à sa demande de changement de rapport pour ensuite opérer ou suspendre le changement de rapport.

Lorsque le calculateur 11, après traitement de l'information "demande de changement de rapport" que lui a adressée le calculateur 14, a répondu qu'il ne commande pas de démarrage ou bien s'il n'y a pas répondu, alors aucun démarrage ne peut plus être commandé par le calculateur 11 et ce jusqu'à ce que ce dernier récupère l'information selon laquelle le changement de rapport a bien été effectué par la boîte robotisée 13.

Ainsi, lors d'une étape 200, le calculateur 11 détermine s'il existe une nouvelle phase de demande de démarrage. Si une telle phase survient, alors à l'étape 201 il vérifie s'il a déjà traité une information "demande de changement de rapport" et s'il n'a pas envoyé de réponse en retour ou bien répondu par la négative.

Si la réponse du test 201 est négative alors il opère la commande du démarrage moteur à l'étape 202 si rien ne s'y oppose par ailleurs.

Si la réponse du test 201 est positive alors il suspend la commande du démarrage et attend, étape 203 que le changement de rapport soit fini. Sitôt le changement de rapport opéré alors la commande du démarrage est déclenchée à l'étape 202. La commande du démarrage étant déclenchée, le calculateur en informe alors le calculateur 14 à l'étape 204.

Ainsi, selon la stratégie décrite ci-dessus aucun fonctionnement simultané du démarreur et de l'actuateur de changement de rapport n'est possible.

Il est à noté que selon l'arbitrage retenu, le démarrage du moteur est toujours prioritaire par rapport à un changement de rapport.

Bien évidemment la présente invention n'est pas limitée au mode particulier de réalisation décrit ci-dessus et on peut apporter à celui-ci de nombreux changements ou modifications sans sortir de la présente invention.

Ainsi, la présente invention vise toute situation où le démarreur se trouve sollicité en même temps qu'un autre consommateur électrique important du réseau de bord du véhicule et par conséquent d'autres équipements électriques peuvent être concerné et pas seulement une boîte de vitesses robotisée 13.

## Revendications

1. Procédé de commande du fonctionnement d'une machine électrique formant démarreur (8) d'un moteur thermique (2) dans un système d'arrêt et de démarrage automatique dudit moteur et d'un équipement électrique (13), le démarreur et l'équipement électrique étant alimentés par une même source d'énergie (9), par lequel les fonctionnements dudit démarreur (8) et dudit équipement (13) sont respectivement commandés après qu'une phase de demande de fonctionnement ait été identifiée et sous réserve que des conditions prédéterminées ne s'y opposent pas, le fonctionnement du démarreur (8) constituant une condition s'opposant à un fonctionnement simultané dudit équipement (13),
**caractérisé en ce que**
le fonctionnement dudit équipement (13) n'est possible après une période de temps prédéterminée (T1) suivant l'identification d'une phase de demande de fonctionnement dudit équipement (13) et que si aucune commande du fonctionnement du démarreur (8) n'a été identifiée pendant ladite période, ledit démarreur (8) et ledit équipement (13) coopérant chacun avec un calculateur spécifique (11;14) opérant l'identification des phases de demande de fonctionnement correspondantes, lesdits calculateurs (11;14) s'échangeant des informations au moyen d'une liaison adaptée tel qu'un bus, et ladite période de temps prédéterminée (T1) étant calibrée de façon à prendre en compte les temps de transfert des informations d'un calculateur à l'autre (11;14) et les temps de traitement desdites informations.

2. Procédé de commande selon la revendication 1, **caractérisé en ce que** la commande du fonctionnement du démarreur (8) s'oppose au fonctionnement simultané dudit équipement (13).

3. Procédé de commande selon la revendication 1, **caractérisé en ce que** le fonctionnement dudit équipement (13) s'oppose au fonctionnement dudit démarreur (8).

4. Procédé de commande selon l'une quelconque des revendications précédentes, **caractérisé en ce que** ledit équipement (13) coopère avec le système de transmission du véhicule.

5. Procédé de commande selon l'une quelconque des revendications précédentes, **caractérisé en ce que** si une commande de fonctionnement du démarreur (8) n'est pas opérée consécutivement à l'identification d'une phase de demande de fonctionnement dudit équipement (13) alors le fonctionnement dudit démarreur (8) n'est plus autorisé tant que ledit équipement (13) n'a pas fini son fonctionnement effectué consécutivement à ladite phase de demande de fonctionnement.

6. Procédé de commande selon l'une quelconque des revendications précédentes, **caractérisé en ce que** le calculateur (10) coopérant avec le démarreur (8) transmet au calculateur (14) coopérant avec l'équipement (13) l'information qu'un fonctionnement du démarreur est commandé.

7. Procédé de commande selon l'une quelconque des revendications précédentes, **caractérisé en ce que** le calculateur (14) coopérant avec l'équipement (13) transmet au calculateur (11) coopérant avec le démarreur (8) l'information qu'une phase de demande de fonctionnement de l'équipement a été identifiée et ce préalablement à toute commande dudit équipement (13).

## Patentansprüche

1. Verfahren zur Steuerung des Betriebs einer Elektromaschine, die einen Starter (8) einer Brennkraftmaschine (2) in einem automatischen Start-/Stoppsystem der Maschine bildet, und einer elektrischen Vorrichtung (13), wobei der Starter und die elektrische Vorrichtung durch dieselbe Energiequelle (9) versorgt werden, durch die jeweils der Betrieb des Starters (8) und der Vorrichtung (13) gesteuert wird, nachdem eine Betriebsanfragephase identifiziert wurde, und vorbehaltlich der Tatsache, dass vorbestimmte Bedingungen dem nicht entgegenstehen, wobei der Betrieb des Starters (8) eine Bedingung bildet, die einem gleichzeitigen Betrieb der Vorrichtung (13) entgegensteht,
**dadurch gekennzeichnet, dass**
der Betrieb der Vorrichtung (13) nach einer vorbestimmten Zeitperiode (T1) im Anschluss an die Identifikation einer Betriebsanfragephase der Vorrichtung (13) nicht möglich ist und dass, falls keine Betriebssteuerung des Starters (8) während der Periode identifiziert wurde, der Starter (8) und die Vorrichtung (13) jeweils mit einem spezifischen Rechner (11; 14) zusammenwirken, der die Identifikation der entsprechenden Betriebsanfragephasen ausführt, wobei die Rechner (11; 14) untereinander Informationen mittels eines zweckdienlichen Verbindungsmittels, wie mittels eines Busses, austauschen, und die vorbestimmte Zeitperiode (T1) derart kalibriert ist, dass die Transferzeiten der Informationen von einem Rechner zu dem anderen (11; 14) und die Verarbeitungszeiten der Informationen berücksichtigt werden.

2. Verfahren zur Steuerung nach Anspruch 1, **dadurch gekennzeichnet, dass** die Steuerung des Betriebs des Starters (8) dem gleichzeitigen Betrieb der Vorrichtung (13) entgegensteht.

3. Verfahren zur Steuerung nach Anspruch 1, **dadurch gekennzeichnet, dass** der Betrieb der Vorrichtung (13) dem Betrieb des Starters (8) entgegensteht.

4. Verfahren zur Steuerung nach einem der vorstehenden Ansprüche, **dadurch gekennzeichnet, dass** die Vorrichtung (13) mit dem Übertragungssystem des Fahrzeugs zusammenwirkt.

5. Verfahren zur Steuerung nach einem der vorstehenden Ansprüche, **dadurch gekennzeichnet, dass**, falls eine Betriebssteuerung des Starters (8) im Anschluss an die Identifikation einer Betriebsanfragephase der Vorrichtung (13) nicht erfolgt, der Betrieb des Starters (8) nicht mehr gestattet wird, solange die Vorrichtung (13) ihren Betrieb, der im Anschluss an die Betriebsanfragephase ausgeführt wird, nicht abgeschlossen hat.

6. Verfahren zur Steuerung nach einem der vorstehenden Ansprüche, **dadurch gekennzeichnet, dass** der Rechner (10), der mit dem Starter (8) zusammenwirkt, dem Rechner (14), der mit der Vorrichtung (13) zusammenwirkt, die Information, dass ein Betrieb des Starters gesteuert wird, überträgt.

7. Verfahren zur Steuerung nach einem der vorstehenden Ansprüche, **dadurch gekennzeichnet, dass** der Rechner (14), der mit der Vorrichtung (13) zusammenwirkt, dem Rechner (11), der mit dem Starter (8) zusammenwirkt, die Information, dass eine Betriebsanfragephase der Vorrichtung identifiziert wurde, überträgt, und zwar vor jeglichem Steuern der Vorrichtung (13).

## Claims

1. A method of controlling the operation of an electrical machine forming the starter (8) of a heat engine (2) in a system for the automatic stopping and starting of said engine and of an electrical equipment (13), the starter and the electrical equipment being supplied by the same energy source (9), by which the operations of the said starter (8) and of the said equipment (13) are respectively controlled after an operation request phase has been identified and provided that predetermined conditions are not opposed thereto, the operation of the starter (8) constituting a condition opposed to a simultaneous operation of the said equipment (13),
**characterized in that**
the operation of the said equipment (13) is possible after a predetermined period of time (T1) following the identification of an operation request phase of the said equipment (13) and only if no control of the operation of the starter (8) has been identified during the said period, the said starter (8) and the said equipment (13) each cooperating with a specific computer (11; 14) operating the identification of the corresponding operation request phases, said computers (11; 14) exchanging information with each other by means of a suitable link, such as a bus, and the said predetermined period of time (T1) being calibrated so as to take into account the transfer times of the information from one computer to the other (11; 14) and the processing times of the said information.

2. The method of controlling according to Claim 1, **characterized in that** the control of the operation of the starter (8) is opposed to the simultaneous operation of the said equipment (13).

3. The method of controlling according to Claim 1, **characterized in that** the operation of the said equipment (13) is opposed to the operation of the said starter (8).

4. The method of controlling according to any one of the preceding claims, **characterized in that** the said equipment (13) cooperates with the transmission system of the vehicle.

5. The method of controlling according to any one of the preceding claims, **characterized in that** if an operation control of the starter (8) is not performed consecutively to the identification of an operation request phase of the said equipment (13), then the operation of the said starter (8) is no longer authorized as long as the said equipment (13) has not ended its operation performed consecutively to the said operation request phase.

6. The method of controlling according to any one of the preceding claims, **characterized in that** the computer (10) cooperating with the starter (8) transmits to the computer (14) cooperating with the equipment (13) the information that an operation of the starter is controlled.

7. The method of controlling according to any one of the preceding claims, **characterized in that** the computer (14) cooperating with the equipment (13) transmits to the computer (11) cooperating with the starter (8) the information that an operation request phase of the equipment has been identified and this being prior to any control of the said equipment (13).
